# EUROPEAN PATENT SPECIFICATION

(11) **EP 0 611 335 B1**
(45) Date of publication and mention of the grant of the patent: **27.08.1997**
(21) Application number: 92923441.7
(22) Date of filing: 04.11.1992
(51) Int. Cl.: B23C 5/08, B23C 5/22, B23D 61/06

(54) **SLOT MILLING TOOL WITH INSERTS CLAMPED BY ECCENTRIC OR CAM-SHAPED MEMBERS**
NUTFRÄSE MIT SCHNEIDEEINSÄTZEN GESPANNT DURCH EXZENTER ODER NOCKEN
OUTIL DE FRAISAGE A RAINURES, A PIECES RAPPORTEES SERREES PAR DES ELEMENTS EXCENTRIQUES OU EN FORME DE CAME

(30) Priority: 07.11.1991 SE 9103291
(43) Date of publication of application: 24.08.1994
(73) Proprietor: MIRCONA AB, S-801 33 Gävle (SE)
(72) Inventor: MIHIC, Wlajko, S-802 67 Gävle (SE)
(74) Representative: Nordén, Ake
(86) International application number: PCT/SE92/00762
(87) International publication number: WO 93/08945

(56) References cited:
- CH-A- 120 050
- US-A- 990 068
- US-A- 1 707 903
- US-A- 4 357 123
- US-A- 4 363 576
- US-A- 4 558 974
- US-A- 4 938 640
- CH-A- 120 050
- US-A- 990 068
- US-A- 1 707 903
- US-A- 4 357 123
- US-A- 4 363 576
- US-A- 4 558 974
- US-A- 4 938 640

## Description

### Technical field of the invention

This invention relates especially to milling tools according to the precharacterising portion of claim 1 for slot milling operations, i.e. rotating tools for milling slots in work pieces; see CH-A 120 050.

### Background of the invention

Many different types of rotating milling tools for slots are known and as an example of the state of art may be mentioned such a tool including an essentially disc shaped body, at its periphery having a number of recesses or cuts in which inserts are arranged. The cuts are arranged in such a way relatively to the inserts, e.g. with essentially radially localized complementary abutments portions, that the positioning necessary in axial and circumferential direction, i.e. the direction of working, is achieved. In radial direction, the tools are secured, besides by the influence of the cutting forces, by friction and clamping action excerted by material portions adjoining the cuts only. This clamping force is dependent on the tolerances between the cut and the insert and could to a certain extent also be influenced negatively by material fatigue in the adjoining material portions.

This implies that the ability of the disc shaped body to retain the inserts is dependent on the rotational speed of the milling tool, i.e. the centrifugal force, and this is the background of the one of the most prominent drawbacks of known slot milling tools, namely that the ability to retain the inserts decreases or ceases when the speed is allowed to go beyond the intended one and also when the material of the disc shaped body starts to be fatigued. There are known cases where milling discs have been rotated with too high a speed and the inserts like bullets from an automatic weapon have been thrown from the retaining disc causing great hazard for persons nearby. It is obvious that such tools even if they have a notation concerning speed limit recommended by the manufacturer are to be regarded as dangerous tools.

One aspect of the invention is to bring about a device eliminating the above mentioned risks for inserts e.g. at too high a rotational speed will leave the tool holder disc.

Another aspect is to bring about a device allowing safe and stable fixation of inserts also at very thin discs.

Another aspect is to bring about a device where the dependency of remaining resiliency characteristics of the material to the largest possible extent is eliminated and where the locking of the inserts is based on relations between configurations.

Still another aspect is to make it possible to use a per se known insert also at slot milling tools.

These objects are achieved with a rotating milling tool having the features of claim 1.

### Summary of the invention

This invention is based on the idea to use inserts of the kind where a shaft shows one or more abutment faces being inclined against the possible pull out or loosening direction arranged to engage an opposite abutment and besides that to arrange a manually settable abutment in such a way that independently of the condition of the material, the intended clamping is ensured.

The device according to this invention includes a number of peripherally discrete recesses at a disc shaped insert holder which recesses have a shape adapted to the inserts intended to be received in such recesses wherein one side of each such recess includes an essentially V-shaped slot or ridge whereas an opposite side shows a protruding end portion arranged to, in the mounted position of the insert, engage an abutment surface of the insert being inclined from the direction of insertion beyond the top point of said inclined surface, which end portion is a part of a projection separated from the rest of the insert holder body by cuts in three directions defined tongue like extension which against the inherent resistance of the material is bendable or displaceable relatively to the remainder of the body and wherein at the insert holder body between the side of the tongue like extension facing away from the engagement end portion and an opposite portion of the insert holder body is arranged a settable clamping device arranged to, in a controllable way, press the tongue like extension towards the insert thereby creating a positive clamping of an insert arranged between the same and an opposite portion of the disc shaped body.

In the preferred embodiment the settable clamping device is an excenter device mounted in an opening at the disc shaped insert body holder adjacent the one cut of the tongue like extension so that the excenter device on turning thereof engages said extension and displaces it towards the insert.

### Detailed description of preferred embodiment

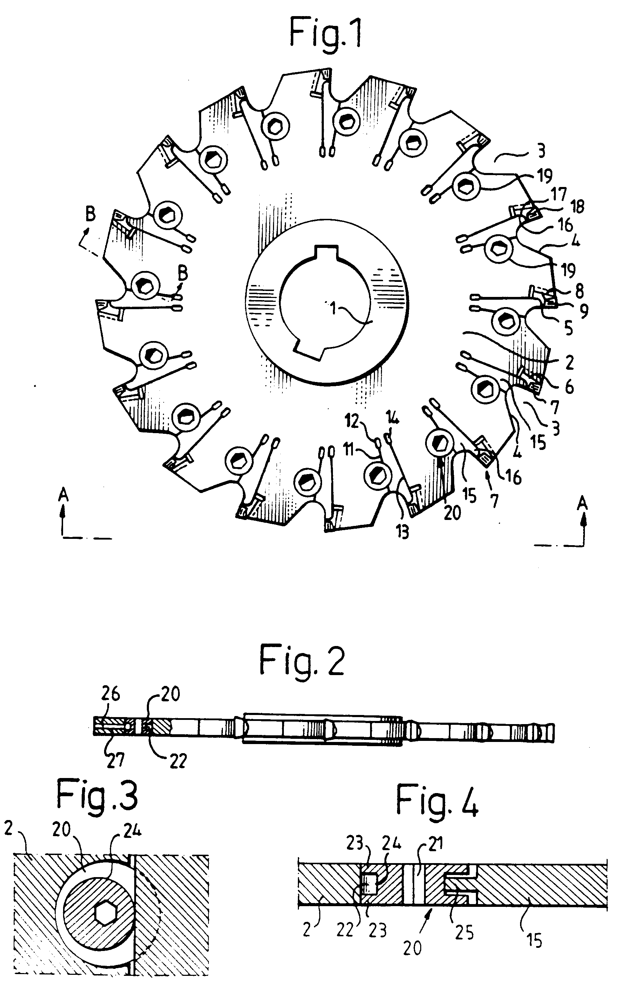

A preferred embodiment of this invention will be described in the following with references to the accompanying drawings, in which
Figure 1 is a slot milling tool according to the invention and seen in axial direction,
Figure 2 partly in section shows the same tool seen radially wherein the section is taken along the line A-A in Figure 1,
Figure 3 is a sectional view of a broken out portion illustrating in axial direction the excenter device and adjoining portions, and
Figure 4 shows the same as Figure 3 in a radial sectional view along the line B-B in Figure 1.

The embodiment shown in the drawings includes a hub portion 1 adapted for the milling machines to be used which hub portion is surrounded by a disc shaped milling body 2. At the periphery of the milling body disc there are a number of recesses 3 having an oblique edge 4 and an essentially radially oriented edge 5. At the latter edge there is a seat 6 for an insert 7 of a known type. The seat has a V-shaped notch 8 intended to cooperate with the V-shaped lower or engagement side 9 of the insert 6. The radial extension of the notch 8 normally is larger than the length of the facing portion of the insert.

From the lowermost portion of each of the recesses 3 emerges a slot like through cut 11 ending in an indication of fracture preventing bore 12 and from the area adjacent the insert seat another such cut 13 having a corresponding bore 14. The two cuts define a tongue like extension 15, projecting outwardly towards the bottom portion of each recess 3. As the tongue like extension 15 is connected to the rest of the disc 2 in one direction only, it is obvious that it against the inherent resistance action of the material, is movable or swingable around the material portion between the two bores 12 and 14. The end portion projecting towards the extension 15 has a nose 16 arranged to engage primarily the engagement face 17 inclined against the direction of the insertion of the insert 6 and besides that form an end stop for the insert by forming an abutment for the cutting head 18.

In openings 19 so localized that the main part thereof is within the main part of the disc shaped body, the clamping devices designated 20 are arranged. These include circular plates having a centrally arranged hexagon hole 21 and a peripherally arranged slot 22 on each side thereof leaving circumferential guiding edges 23. The bottom of the slot 24 forms a cam or excentric curve intended to engage a projection 25 arranged between the guiding edges 23, said projection 25 having a reduced thickness and covering part of the opening 19 overlapping the tongue shaped extension 15. On turning the plate 20 by means of an appropriate hexagon key, the peripheries of the guiding edges 23 of a circular plate will slide against the edge of the opening 19 while the projection 25 by influence of the slot bottom 24 acting as a cam curve will be displaced away from or allowed to approach the portion of the tool holder disc where the plate 20 is rotatably arranged.

In order to ensure that the circular plates 20 remain each one in its opening 19, there are guiding pins 26 inserted through narrow bores 27 running from the periphery of the body 2 essentially radially into each opening or hole 19 in order to project into the slot 22 as a retaining abutment.

The rise of the slot bottom 24 forming a cam or excentric curves is arranged in such a per se known way that a self locking effect is achieved. No further locking devices are necessary and the circular plate will remain in each set position.

On mounting of inserts at the circular tool holder disc 1,2 the inserts are pushed, one into each seat so that the V-shaped lower portion 9 of the insert runs along the V-shaped abutment track 8 whereupon the insert will be pushed inwardly until the outer end 16 of the tongue 15 has ascended the shaft portion of the insert, reached and passed the highest point thereof and thereupon followed the surface oppositely obliquely arranged until the rear portion of the cutting head 18 abuts against the tongue 15. In such a position the tongue 15 has essentially returned to its neutral or uninfluenced position after having been forced outwardly by the protruding ridge of the insert shaft and allowed to descend the adjoining oblique face.

On turning the clamping device 20, i.e. the circular plate by means of a key in its opening 19, in the clamping direction, the tongue shaped extension 15, because of the excentric action caused by the bottom 24 of a slot against the projection 25, will be pressed away forcefully which results in a heavy pressure being excerted by the end of the extension towards the insert 15 and - because of the position of the mutual point of engagement - securing the same by means of a locking due to shape.

On replacing an insert the circular plate 20 will be turned in the opposite direction resulting in a decrease of the pressure of the excentric or cam curve against the projection 25 and loosening of the tongue shaped extension 15. On removing the insert the extension 15 will, to start with, be lifted a little and then allowed to return to its neutral position.

By the device according to this invention the simplest possible mounting and dismounting of inserts is achieved and also a stable clamping of the inserts during work operations practically independent of the rotational speed of the milling tool.

## Claims

1. Rotating milling tool device, especially a slot or track milling tool, wherein a number of inserts, (7) each having an insignificant axial extension, are arranged at the peripheral portion of an essentially disc shaped tool holder body (2), each one of the inserts (7) being received in a seat having guiding means for the positioning of the insert, wherein each such insert (7) has at least one abutment face (17) which is to be engaged by an abutment portion (16) adjacent each respective seat of the tool holder body (2), each such abutment portion being an essentially tongue shaped portion (15) integral with the tool holder body and defined by cuts or the like (11,13) for allowing predetermined movability relatively to the tool holder body, the abutment portion holding and supporting an insert inserted into such a seat and wherein, between each of the tongue shaped portions (15) and the remainder of the tool holder body (2), is arranged a clamping device (20) including a rotatably arranged piece inside an opening and having a thickness essentially corresponding to that of the tool holder body, **characterized** in that said rotatably arranged clamping device (20) further includes at least one surface (24) to function as a cam or eccentric, which surface on turning of the clamping device is arranged to, without peripheral or radial displacement of the clamping device relatively to the tool holder body, displace the tongue shaped portion (15) peripherally so that the abutment portion (16) thereof increasingly powerful engages the relatively to the direction of insertion obliquely arranged abutment face (17) of the insert thereby securing the insert (7) also due to mutual cooperation of configurations at the insert and the tool holder body, and in that at each of the tongue shaped portions (15), the nose (16) intended to engage the insert is localized adjacent the free end of said tongue shaped portions whereas the portion (25) thereof intended to be biassed by the clamping device, being at the opposite edge thereof, is closer to the connection between the tongue shaped portion and the remainder of the holder body.

2. Device according to claim 1,
**characterized** in that the cam or curve surfaces (24) of the clamping devices (20) have such a rise that a self locking effect is achieved in reached set position.

3. Device according to claim 1,
**characterized** in that each rotatably arranged clamping device includes a circular plate having a centrally arranged through tool engaging hole and a peripherally arranged slot (22) defined by two tool holder body opening (19) engaging edges (23), the bottom (24) of the slot (22) forming an excentric curve or cam; and in that the one part of the opening (19) bridging a cut separating a tongue shaped portion (15) and the remainder of the tool holder body (2) presents a projection (25) extending essentially longitudinally of the said tongue shaped portion and adapted to be straddled by the plate edges (23) and engaged by the slot bottom (24) therebetween for acting as an excenter means biassing the tongue shaped portion (15) in turn engaging an insert (7).

## Patentansprüche

1. Sich drehendes Fräswerkzeug, insbesondere eine Nut- oder Spurfräse, bei dem eine Anzahl von Einsätzen (7), die jeweils eine unbedeutende axiale Ausdehnung haben, im Randbereich eines im wesentlichen scheibenförmigen Werkzeughalterkörpers (2) angeordnet sind, wobei jeweils einer der Einsätze (7) in einer Aufnahme aufgenommen wird, die Führungsmittel für das Positionieren aufweist, wobei jeder solche Einsatz (7) wenigstens eine Anlagefläche (17) hat, die an einem Anlagebereich (16) benachbart jeder jeweiligen Aufnahme des Werkzeughalterkörpers (2) zur Anlage kommen sollen, wobei jeder solche Anlagebereich (16) ein im wesentlichen zungenförmiger Bereich (15) ist, der einstückig mit dem Werkzeughalterkörper ausgebildet ist und der durch Ausschnitte oder dergleichen (11, 13) definiert ist, um eine vorbestimmte Beweglichkeit relativ zu dem Werkzeughalterkörper zu ermöglichen, wobei der Anlagebereich einen Einsatz hält und trägt, der in eine solche Sitzfläche eingelassen ist und wobei, zwischen jedem der zungenförmigen Bereiche (15) und dem Rest des Werkzeughalterkörpers (2), eine Klemmvorrichtung (20) angeordnet ist, welche ein drehbar angeordnetes Teil innerhalb einer Öffnung umfaßt und eine Dicke hat, die im wesentlichen der des Werkzeughalterkörpers entspricht, dadurch gekennzeichnet, daß die drehbar angeordnete Klemmvorrichtung (20) weiter wenigstens eine Fläche (24) aufweist, die als Kurvenfläche oder exzentrische Fläche wirkt, wobei die Fläche beim Drehen der Klemmvorrichtung so angeordnet ist, daß, ohne randseitige oder radiale Verlagerung der Klemmvorrichtung relativ zu dem Werkzeughalterkörper, der zungenförmige Bereich (15) im Randbereich verlagert wird, so daß dessen Anlagebereich (16) zunehmend kraftvoll an der relativ zu der Einpaßrichtung schräg angeordneten Anlagefläche (17) des Einsatzes angreift, so daß der Einsatz (7) befestigt wird, auch aufgrund des wechselseitigen Zusammenwirkens der Ausgestaltungen am Einsatz und am Werkzeughalterkörper, und daß bei jedem der zungenförmigen Bereiche (15) die Nase (16), die dazu gedacht ist, an dem Einsatz anzugreifen, sich benachbart dem freien Ende der zungeförmigen Bereiche befindet, während deren Bereich (25), der von der Klemmvorrichtung vorbelastet werden soll, die sich an deren gegenüberliegender Kante befindet, näher an der Verbindung zwischen dem zungenförmigen Bereich und dem Rest des Halterkörpers ist.

2. Vorrichtung nach Anspruch 1, dadurch gekennzeichnet, daß die kurvigen oder gekrümmten Flächen (24) der Klemmvorrichtung (20) eine solche Steigung haben, daß eine Selbstverriegelungswirkung in der erreichten eingestellten Position erreicht wird.

3. Vorrichtung nach Anspruch 1, dadurch gekennzeichnet, daß jede drehbar angeordnete Klemmvorrichtung eine kreisförmige Platte umfaßt, mit einem zentral angeordneten Durchgangsloch für den Eingriff mit einem Werkzeug und einer im Randbereich angeordneten Nut (22), definiert durch zwei die Werkzeughalterkörper-Öffnung (19) greifende Kanten (23), wobei der Boden (24) der Nut (22) eine exzentrische Kurve oder Kurvenfläche bildet; und daß der eine Teil der Öffnung (19), welcher einen Ausschnitt überbrückt, der einen zungenförmigen Bereich (15) und den Rest des Werkzeughalterkörpers (2) trennt, einen Vorsprung (25) zeigt, der sich im wesentlichen in Längsrichtung des zungenförmigen Bereiches erstreckt und der so ausgelegt ist, daß er von den Plattenkanten (23) überspannt wird und von dem Nutboden (24) dazwischen eingerückt wird, um als eine Exzentereinrichtung zu wirken, welche den zungenförmigen Bereich (15) vorbelastet, der wiederum an einem Einsatz (7) angreift.

## Revendications

1. Dispositif à outil de fraisage rotatif, notamment un outil de fraisage de rainures ou de pistes, dans lequel un certain nombre de pièces rapportées (7) présentant chacune une extension axiale insignifiante, sont disposées à la partie périphérique d'un corps de porte-outil essentiellement en forme de disque (2), chacune des pièces rapportées (7) étant placée dans un siège présentant des moyens de guidage pour la mise en place de la pièce rapportée, dans lequel chacune de ces pièces rapportées (7) présente au moins une face de butée (17) qui doit être engagée par une partie de butée (16) adjacente à chaque siège respectif du corps de porte-outil (2), chacune de ces parties de butée étant une partie essentiellement en forme de languette (15) solidaire du corps de porte-outil et définie par des découpes ou analogues (11, 13) pour permettre une mobilité prédéterminée par rapport au corps de porte-outil, la partie de butée maintenant et supportant une pièce rapportée insérée dans un tel siège et dans lequel, entre chacune des parties en forme de languette (15) et le reste du corps de porte-outil (2), est monté un dispositif de serrage (20) comprenant une pièce disposée de manière rotative à l'intérieur d'une ouverture et présentant une épaisseur correspondant essentiellement à celle du corps de porte-outil,
**caractérisé** en ce que ledit dispositif de serrage disposé de manière rotative (20) comprend en outre au moins une surface (24) prévue pour agir en tant que came ou en tant qu'excentrique, surface qui, lors de la rotation du dispositif de serrage, est disposée de manière à, sans déplacement périphérique ou radial du dispositif de serrage par rapport au corps de porte-outil, déplacer la partie en forme de languette (15) de manière périphérique de sorte que sa partie de butée (16) s'engage de manière de plus en plus puissante avec la face de butée (17) disposée obliquement par rapport à la direction d'insertion de la pièce rapportée en fixant ainsi la pièce rapportée (7) également du fait de la coopération mutuelle des configurations au niveau de la pièce rapportée et du corps de porte-outil, et en ce qu'au niveau de chacune des parties en forme de languette (15), le nez (16) prévu pour engager la pièce rapportée est placé de manière adjacente à l'extrémité libre desdites parties en forme de languette tandis que la partie (25) de celles-ci prévue pour être poussée par le dispositif de serrage, étant au niveau de son bord opposé, est plus près de la liaison entre la partie en forme de languette et le reste du corps de porte-outil.

2. Dispositif selon la revendication 1,
**caractérisé** en ce que les surfaces à came ou à courbe (24) des dispositifs de serrage (20) présentent une montée telle qu'un effet d'auto-verrouillage est obtenu dans la position réglée atteinte.

3. Dispositif selon la revendication 1,
**caractérisé** en ce que chaque dispositif de serrage disposé de manière rotative comprend une plaque circulaire présentant un trou d'engagement d'outil traversant disposé de manière centrale et une rainure périphérique (22) définie par deux bords d'engagement (23) de l'ouverture (19) du corps de porte-outil, le fond (24) de la rainure (22) formant une courbe ou une came excentrique ; et en ce que la partie de l'ouverture (19) reliant une découpe séparant une partie en forme de languette (15) et le reste du corps de porte-outil (2) présente une saillie (25) s'étendant de manière essentiellement longitudinale à ladite partie en forme de languette et prévue pour être chevauchée par les bords de plaque (23) et engagée par le fond de rainure (24) entre eux pour agir en tant que moyen excentrique poussant la partie en forme de languette (15) engageant à son tour une pièce rapportée (7).
